# EUROPEAN PATENT APPLICATION

(11) **EP 4 779 929 A1**
(43) Date of publication of application: **22.07.2026**
(21) Application number: 24881123.4
(22) Date of filing: 24.07.2024
(51) Int. Cl.: H04L 9/40

(54) **DATA PROCESSING METHOD, AND APPARATUS, DEVICE AND COMPUTER-READABLE STORAGE MEDIUM**

(30) Priority: 26.10.2023 CN 202311408942
(71) Applicant: HUAWEI TECHNOLOGIES CO., LTD., Shenzhen 518129 (CN)
(72) Inventor: JIANG, Wu, Shenzhen, Guangdong 518129 (CN); ZHANG, Zhao, Shenzhen, Guangdong 518129 (CN)
(74) Representative: Pfenning, Meinig & Partner mbB
(86) International application number: PCT/CN2024/107189
(87) International publication number: WO 2025/086752

(57) **Abstract**

This application discloses a data processing method, apparatus, and device, and a computer-readable storage medium, and belongs to the field of communication technologies. The method includes: A first apparatus obtains first data; determines an attribute tag of the first data, where the attribute tag indicates attribute information of the first data in different dimensions; obtains second data based on the first data and the attribute tag, where the second data includes the first data, and further includes at least one of the attribute tag and a sending policy obtained based on the attribute tag, and the sending policy indicates whether a device receiving the second data intercepts the second data; and sends the second data to a second apparatus. Whether the first data needs transmission protection is determined based on the attribute information in the different dimensions, to determine the sending policy, thereby avoiding data leakage caused by allowing unintended data to be sent and ensuring high data transmission security. In addition, the sending policy may be determined based on the attribute tag. Therefore, few procedures are involved in determining the sending policy, featuring simple operations and high efficiency.

## Description

This application claims priority to Chinese Patent Application No. 202311408942.9, filed on October 26, 2023 and entitled "DATA PROCESSING METHOD, APPARATUS, AND DEVICE, AND COMPUTER-READABLE STORAGE MEDIUM", which is incorporated herein by reference in its entirety.

### TECHNICAL FIELD

This application relates to the field of communication technologies, and in particular, to a data processing method, apparatus, and device, and a computer-readable storage medium.

### BACKGROUND

With development of communication technologies, there are data leakage risks inevitably. Data leakage means that sensitive data that needs to be kept confidential is leaked, lost, or stolen without authorization. Data leakage includes stealing data through ransomware attacks, stealing data by external attackers, and leaking data by internal personnel in violation of regulations.

In a related technology, before data is sent, a network device for data processing collects the to-be-sent data, performs fragmentation and stream reassembly, protocol decryption, application protocol decoding, and file restoration on the collected data, and performs sensitive information matching, data leakage prevention (data leakage prevention, DLP) policy matching, and DLP policy response on the restored data, to determine, based on a response result, whether to allow to send the data, thereby avoiding data leakage caused by sending externally data that needs to be kept confidential.

However, operations such as file restoration and sensitive information matching are involved in the foregoing data processing process. As a result, operations that need to be performed are highly complex, and data processing efficiency is low.

### SUMMARY

This application provides a data processing method, apparatus, and device, and a computer-readable storage medium, to improve efficiency of preventing data leakage.

According to a first aspect, a data processing method is provided. The method is applied to a first apparatus, and the method includes: obtaining first data; determining an attribute tag of the first data, where the attribute tag indicates attribute information of the first data in different dimensions; obtaining second data based on the first data and the attribute tag, where the second data includes the first data, and further includes at least one of the attribute tag and a sending policy obtained based on the attribute tag, and the sending policy indicates whether an apparatus receiving the second data intercepts the second data; and sending the second data to a second apparatus.

Because the attribute tag indicates the attribute information of the first data in the different dimensions, whether the first data needs transmission protection may be determined based on the attribute information in the different dimensions by using the attribute tag, and the sending policy is determined accordingly, to avoid data leakage caused by allowing unintended data to be sent, and ensure high data transmission security. In addition, the sending policy may be determined based on the attribute tag. Therefore, few procedures are involved in determining the sending policy, operations are simple, and efficiency is high.

In a possible implementation, determining the attribute tag of the first data includes: obtaining at least one piece of classification information of the first data, where the classification information indicates an importance degree of the first data in a corresponding classification, the first data corresponds to at least one classification, and classifications indicated by all pieces of classification information in the at least one piece of classification information are different; and determining the attribute tag based on the at least one piece of classification information. The classification information may indicate the importance degree of the first data in the corresponding classification. The attribute tag determined based on the classification information may also indicate the importance degree of the first data. The sending policy subsequently determined based on the attribute tag is used to determine, with reference to the importance degree of the first data, whether the first data can be allowed to be sent, and data transmission security is high.

In a possible implementation, obtaining the second data based on the first data and the attribute tag includes: obtaining an encapsulation result, where the encapsulation result includes the first data and at least one of the attribute tag and the sending policy; and obtaining the second data based on the encapsulation result. When the second data is obtained, only the attribute tag may be encapsulated, or only the sending policy may be encapsulated, or the attribute tag and the sending policy may be encapsulated. A manner of obtaining the second data is highly flexible.

In a possible implementation, obtaining the second data based on the encapsulation result includes: filling the at least one of the attribute tag and the sending policy in a protocol field of the encapsulation result, to obtain the second data. The at least one of the attribute tag and the sending policy is filled in the protocol field that carries the encapsulation result of the at least one of the attribute tag and the sending policy again, to implement backup of the at least one of the attribute tag and the sending policy, thereby improving transmission reliability of the second data.

In a possible implementation, obtaining the second data based on the first data and the attribute tag includes: filling the at least one of the attribute tag and the sending policy in a protocol field of the first data, to obtain the second data. In addition to encapsulating the at least one of the attribute tag and the sending policy to obtain the second data, the second data may be obtained by filling the at least one of the attribute tag and the sending policy in the protocol field. A manner of obtaining the second data is not limited, featuring high universality.

In a possible implementation, before obtaining the second data based on the first data and the attribute tag, the method further includes: obtaining a correspondence between the attribute tag and the sending policy; and determining the sending policy based on the correspondence and the attribute tag. The sending policy may be determined based on the correspondence. A process of determining the sending policy is simple, and determining efficiency is high.

In a possible implementation, the attribute tag includes at least one of a confidentiality level tag, a data type tag, and an object identity tag, the confidentiality level tag indicates a sensitivity level of the first data, the data type tag indicates a data type of the first data, and the object identity tag indicates an identity level of an object corresponding to the first data. Because the attribute tag of the first data may be one or more of the confidentiality level tag, the data type tag, and the object identity tag, the attribute tag has high flexibility, and universality is high.

According to a second aspect, a data processing method is provided. The method is applied to a second apparatus, and the method includes: receiving second data sent by a first apparatus, where the second data includes first data, and further includes at least one of an attribute tag of the first data and a sending policy obtained based on the attribute tag, and the attribute tag indicates attribute information of the first data in different dimensions; parsing the second data, and determining the sending policy of the second data based on a parsing result; and determining, according to the sending policy of the second data, whether to intercept the second data.

Because the attribute tag indicates the attribute information of the first data in the different dimensions, whether the first data needs transmission protection may be determined based on the attribute information in the different dimensions by using the attribute tag, to obtain the sending policy, to avoid data leakage caused by allowing unintended data to be sent, and ensure high data transmission security. In addition, the sending policy may be determined by parsing the second data. Therefore, few procedures are involved in determining the sending policy, operations are simple, and efficiency is high.

In a possible implementation, the second data includes the attribute tag, and determining the sending policy of the second data based on the parsing result includes: determining the attribute tag based on the parsing result; and obtaining a correspondence between the attribute tag and the sending policy, and determining the sending policy based on the correspondence and the determined attribute tag. When the second data includes the attribute tag, the sending policy may be determined by using the determined attribute tag and the correspondence. A process of determining the sending policy is simple, and efficiency is high.

In a possible implementation, determining the attribute tag based on the parsing result includes: when a protocol field obtained by parsing includes the attribute tag, extracting the attribute tag from the protocol field; or when the protocol field obtained by parsing does not include the attribute tag, performing file restoration on the parsing result, and extracting the attribute tag from a restoration result. If the attribute tag is filled in the protocol field, the attribute tag may be extracted by parsing the protocol field. An extraction process is simple. If the attribute tag is encapsulated in the second data, that is, the attribute tag is not extracted from the protocol field, file restoration is further performed, to successfully extract the encapsulated attribute tag. Regardless of a manner in which the attribute tag is carried in the second data, the second apparatus may extract the attribute tag from the second data, thereby improving reliability of obtaining the attribute tag.

In a possible implementation, the second data includes the sending policy, and determining the sending policy of the second data based on the parsing result includes: when a protocol field obtained by parsing includes the sending policy, extracting the sending policy from the protocol field; or when the protocol field obtained by parsing does not include the sending policy, performing file restoration on the parsing result, and extracting the sending policy from a restoration result. When the second data includes the sending policy, the sending policy in the second data may be directly extracted, to obtain the sending policy. An obtaining process is simple, and efficiency is high. In addition, whether the sending policy is encapsulated in the second data or filled in the protocol field, there is a corresponding extraction method, thereby improving reliability of obtaining the sending policy.

In a possible implementation, after determining, according to the sending policy of the second data, whether to intercept the second data, the method further includes: sending the second data to a first network domain when it is determined, according to the sending policy, to allow to send the second data, where the first network domain is determined based on the second data, and the first network domain is different from a network domain in which the first apparatus is located. Cross-network-domain transmission is performed on the second data only when the sending policy indicates that the second data is allowed to be sent, and security of the transmission process of the second data is high.

In a possible implementation, the attribute tag includes at least one of a confidentiality level tag, a data type tag, and an object identity tag, the confidentiality level tag indicates a sensitivity level of the first data, the data type tag indicates a data type of the first data, and the object identity tag indicates an identity level of an object corresponding to the first data. Because the attribute tag of the first data may be one or more of the confidentiality level tag, the data type tag, the object identity tag, and the attribute tag has high flexibility.

According to a third aspect, a data processing apparatus is provided. The apparatus is used in a first apparatus, and the apparatus includes: an obtaining module, configured to obtain first data; a determining module, configured to determine an attribute tag of the first data, where the attribute tag indicates attribute information of the first data in different dimensions, where the obtaining module is further configured to obtain second data based on the first data and the attribute tag, where the second data includes the first data, and further includes at least one of the attribute tag and a sending policy obtained based on the attribute tag, and the sending policy indicates whether an apparatus receiving the second data intercepts the second data; and a sending module, sending the second data to a second apparatus.

In a possible implementation, the determining module is configured to: obtain at least one piece of classification information of the first data, where the classification information indicates an importance degree of the first data in a corresponding classification, the first data corresponds to at least one classification, and classifications indicated by all pieces of classification information in the at least one piece of classification information are different; and determine the attribute tag based on the at least one piece of classification information.

In a possible implementation, the obtaining module is configured to: obtain an encapsulation result, where the encapsulation result includes the first data and at least one of the attribute tag and the sending policy; and obtain the second data based on the encapsulation result.

In a possible implementation, the obtaining module is configured to fill the at least one of the attribute tag and the sending policy in a protocol field of the encapsulation result, to obtain the second data.

In a possible implementation, the obtaining module is configured to fill the at least one of the attribute tag and the sending policy in a protocol field of the first data, to obtain the second data.

In a possible implementation, the obtaining module is further configured to: obtain a correspondence between the attribute tag and the sending policy; and determine the sending policy based on the correspondence and the attribute tag.

In a possible implementation, the attribute tag includes at least one of a confidentiality level tag, a data type tag, and an object identity tag, the confidentiality level tag indicates a sensitivity level of the first data, the data type tag indicates a data type of the first data, and the object identity tag indicates an identity level of an object corresponding to the first data.

According to a fourth aspect, a data processing apparatus is provided. The apparatus is used in a second apparatus, and the apparatus includes: a receiving module, configured to receive second data sent by a first apparatus, where the second data includes first data, and further includes at least one of an attribute tag of the first data and a sending policy obtained based on the attribute tag, and the attribute tag indicates attribute information of the first data in different dimensions; and a determining module, configured to: parse the second data, and determine the sending policy of the second data based on a parsing result, where the determining module is further configured to determine, according to the sending policy of the second data, whether to intercept the second data.

In a possible implementation, the second data includes the attribute tag, and the determining module is configured to: determine the attribute tag based on the parsing result; and obtain a correspondence between the attribute tag and the sending policy, and determine the sending policy based on the correspondence and the determined attribute tag.

In a possible implementation, the determining module is configured to: when a protocol field obtained by parsing includes the attribute tag, extract the attribute tag from the protocol field; or when the protocol field obtained by parsing does not include the attribute tag, perform file restoration on the parsing result, and extract the attribute tag from a restoration result.

In a possible implementation, the second data includes a sending policy, and the determining module is configured to: when a protocol field obtained by parsing includes the sending policy, extract the sending policy from the protocol field; or when the protocol field obtained by parsing does not include the sending policy, perform file restoration on the parsing result, and extract the sending policy from a restoration result.

In a possible implementation, the apparatus further includes: a forwarding module, configured to send the second data to a first network domain when it is determined, according to the sending policy, to allow to send the second data, where the first network domain is determined based on the second data, and the first network domain is different from a network domain in which the first apparatus is located.

In a possible implementation, the attribute tag includes at least one of a confidentiality level tag, a data type tag, and an object identity tag, the confidentiality level tag indicates a sensitivity level of the first data, the data type tag indicates a data type of the first data, and the object identity tag indicates an identity level of an object corresponding to the first data.

According to a fifth aspect, a data processing apparatus is provided. The apparatus includes: a transceiver module, configured to perform a receiving-related operation and/or a sending-related operation in the method according to any one of the first aspect or the possible implementations of the first aspect; and a processing module, configured to perform a receiving-related operation and/or a sending-related operation in the method according to any one of the first aspect or the possible implementations of the first aspect; or a transceiver module, configured to perform a receiving-related operation and/or a sending-related operation in the method according to any one of the second aspect or the possible implementations of the second aspect; and a processing module, configured to perform a receiving-related operation and/or a sending-related operation in the method according to any one of the second aspect or the possible implementations of the second aspect.

According to the sixth aspect, a data processing device is provided. The device includes a processor. The processor is configured to load and execute at least one instruction, to enable the data processing device to perform the method according to any one of the first aspect or the possible implementations of the first aspect, or perform the method according to any one of the second aspect or the possible implementations of the second aspect.

In a possible implementation, the device includes a memory, the memory is coupled to the processor, and the memory stores the at least one instruction.

According to a seventh aspect, a data processing system is provided. The system includes a second apparatus and a first apparatus, the first apparatus is configured to perform the method according to any one of the first aspect or the possible implementations of the first aspect, and the second apparatus is configured to perform the method according to any one of the second aspect or the possible implementations of the second aspect.

According to an eighth aspect, a computer-readable storage medium is provided. The computer-readable storage medium stores at least one instruction, and the instruction is loaded and executed by a processor, to implement the data processing method according to any one of the first aspect or the possible implementations of the first aspect, or implement the data processing method according to any one of the second aspect or the possible implementations of the second aspect.

According to a ninth aspect, a computer program (product) is provided. The computer program (product) includes a computer program/instructions, and the computer program/the instructions is/are executed by a processor, to enable a computer to implement the data processing method according to any one of the first aspect or the possible implementations of the first aspect, or implement the data processing method according to any one of the second aspect or the possible implementations of the second aspect.

According to a tenth aspect, a communication apparatus is provided. The apparatus includes a transceiver, a memory, and a processor. The transceiver, the memory, and the processor communicate with each other through an internal connection path. The memory is configured to store instructions. The processor is configured to execute the instructions stored in the memory, to control the transceiver to receive a signal and control the transceiver to send a signal. In addition, when the processor executes the instructions stored in the memory, the processor is enabled to perform the method according to any one of the first aspect or the possible implementations of the first aspect, or perform the method according to any one of the second aspect or the possible implementations of the second aspect.

Optionally, there are one or more processors, and there are one or more memories.

Optionally, the memory and the processor may be integrated together, or the memory and the processor may be separately disposed.

In a specific implementation process, the memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in this application.

According to an eleventh aspect, a chip is provided. The chip includes a processor, configured to invoke program instructions or code stored in a memory and run the program instructions or the code stored in the memory, so that a communication device on which the chip is installed performs the method according to the foregoing aspects.

According to a twelfth aspect, another chip is provided. The chip includes an input interface, an output interface, a processor, and a memory. The input interface, the output interface, the processor, and the memory are connected through an internal connection path. The processor is configured to execute code in the memory; and when the code is executed, the processor is configured to perform the method according to the foregoing aspects.

It should be understood that for beneficial effect achieved by the technical solutions of the third aspect to the twelfth aspect of this application and the corresponding possible implementations, refer to the foregoing technical effect of the first aspect and the corresponding possible implementations of the first aspect or the second aspect and the corresponding possible implementations of the second aspect. Details are not described herein again.

### BRIEF DESCRIPTION OF DRAWINGS

FIG. 1 is a diagram of an implementation environment according to an embodiment of this application;
FIG. 2 is a diagram of another implementation environment according to an embodiment of this application;
FIG. 3 is a diagram of a data transmission scenario according to an embodiment of this application;
FIG. 4 is a flowchart of a data processing method according to an embodiment of this application;
FIG. 5 is a diagram of interaction between a first apparatus and a second apparatus according to an embodiment of this application;
FIG. 6 is another diagram of interaction between a first apparatus and a second apparatus according to an embodiment of this application;
FIG. 7 is still another diagram of interaction between a first apparatus and a second apparatus according to an embodiment of this application;
FIG. 8 is a diagram of a structure of a data processing apparatus according to an embodiment of this application;
FIG. 9 is a diagram of a structure of another data processing apparatus according to an embodiment of this application;
FIG. 10 is a diagram of a structure of a network device according to an embodiment of this application; and
FIG. 11 is a diagram of a structure of another network device according to an embodiment of this application.

### DESCRIPTION OF EMBODIMENTS

Terms used in implementations of this application are merely used to explain specific embodiments of this application, but are not intended to limit this application. To make objectives, technical solutions, and advantages of this application clearer, the following further describes the implementations of this application in detail with reference to the accompanying drawings.

With development of communication technologies, data in a network increases explosively, and sensitive data is often transmitted externally without authorization in the network, causing a security problem of data leakage. Therefore, a data processing method is required, to avoid data leakage, and improve security.

In a related technology, for to-be-sent traffic data, whether there is sensitive data in the traffic data is determined by network traffic monitoring, data restoration, and content identification, to perform a response operation such as interception on the sensitive data according to a policy. A data processing process includes: performing traffic collection on to-be-sent traffic data, performing fragmentation and stream reassembly, protocol decryption, application protocol decoding, and file restoration on the traffic data, and after the traffic data is restored by using the foregoing operations, performing sensitive information matching on the traffic data obtained through restoration, to determine whether the traffic data is sensitive data that is restricted to be sent, and performing DLP policy matching based on a matching result, to determine whether to intercept the traffic data or allow to send the traffic data according to a sending policy of the traffic data. In the foregoing data processing method, for encrypted data, for example, traffic data transmitted according to the transport layer security (transport layer security, TLS) protocol, performance of performing protocol decryption on the encrypted data is low, and efficiency is low. In the data processing process, the operations such as file restoration and sensitive information matching need to be performed, and matching the traffic data causes low data processing efficiency. In addition, if the sent traffic data is compressed, for example, encrypted and compressed, whether the traffic data is the sensitive data cannot be accurately identified, data leakage is easily caused, and security is low.

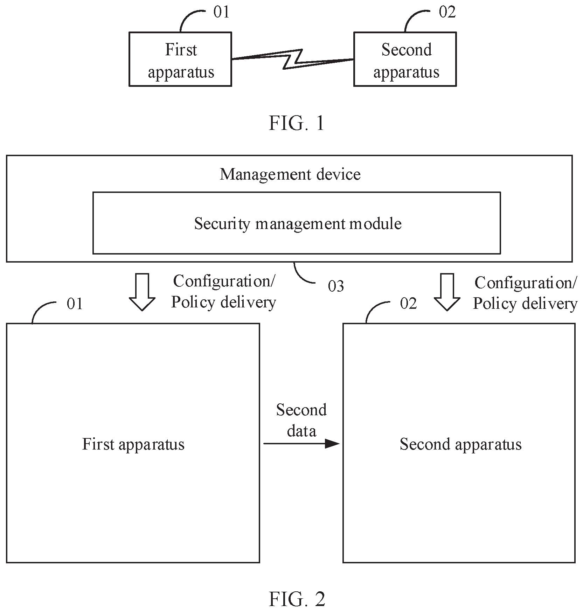

Embodiments of this application provide a data processing method, to determine, in a data sending process, whether data needs to be intercepted and whether the data can continue to be sent, to avoid data leakage caused by allowing unintended data to be sent. FIG. 1 is a diagram of an implementation environment of a data processing method according to an embodiment of this application. The implementation environment includes a first apparatus 01 and a second apparatus 02. A communication connection may be established between the first apparatus 01 and the second apparatus 02 in a wired or wireless network manner. For example, the first apparatus 01 generates second data based on first data and an attribute tag of the first data, and sends the second data to the second apparatus 02. The second apparatus 02 parses the received second data, determines a sending policy based on a parsing result, and determines, based on the sending policy, whether to intercept the second data.

For example, refer to FIG. 2. The implementation scenario further includes a management device 03. The management device 03 establishes a communication connection to each of the first apparatus 01 and the second apparatus 02. The management device 03 includes a security management module. The security management module may deliver, to the first apparatus 01 or the second apparatus 02, a configuration/policy involved in a data processing process. The configuration is configuration information of the first data, for example, the attribute tag of the first data. The policy may be the sending policy.

In a possible implementation, the first apparatus 01, the second apparatus 02, and the management device 03 may be any devices having a data transmission function. The first apparatus 01, the second apparatus 02, and the management device 03 may be terminal devices such as desktop computers, notebook computers, or smartphones, or may be servers, for example, central servers, edge servers, or local servers in a local data center. The server may be a physical server, or may be a cloud server that provides a cloud computing service. For example, the second apparatus 02 may alternatively be a forwarding device such as a gateway, a router, and a switch. Optionally, the first apparatus 01 and the second apparatus 02 may be independent devices, or may be applications, network interface cards, or the like configured in the devices. In addition, the first apparatus 01 and the second apparatus 02 may be configured in different devices, or may be configured in a same device.

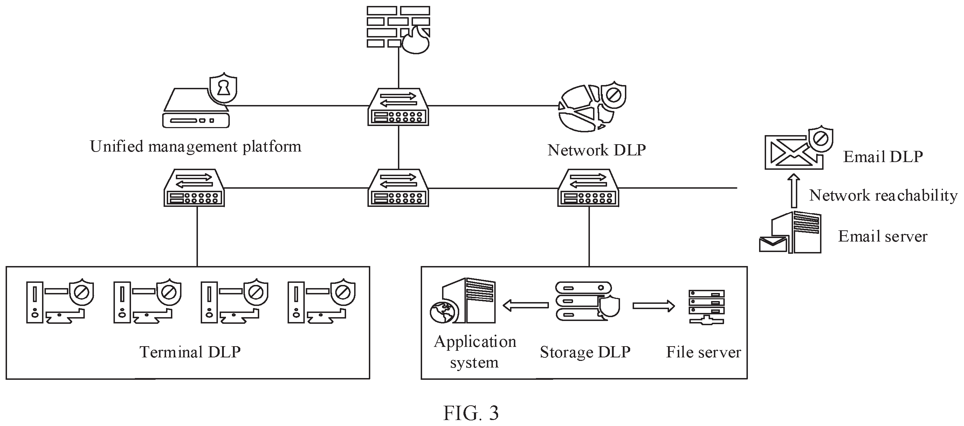

An application scenario of data processing is not limited in embodiments of this application. FIG. 3 is a diagram of a data transmission scenario according to an embodiment of this application. In FIG. 3, DLP includes a plurality of types such as network DLP, terminal DLP, storage DLP, and email DLP, and a type of the DLP is determined based on the data transmission scenario. The network DLP is performing DLP on sent data in a process of sending the data between different network domains through a network. The terminal DLP is performing DLP on sent data in a process of sending the data between different terminals. The storage DLP is performing DLP on stored data in a process of storing the data. For example, as shown in FIG. 3, in the storage process, the data is alternatively transmitted between a file server and an application system, and data leakage needs to be avoided in the data sending process. The email DLP is performing DLP on the data that is sent in the data sending process by email. For different types of DLP, the second apparatus 02 may be a terminal in the terminal DLP, or an email server in the email DLP. This is not limited in embodiments of this application.

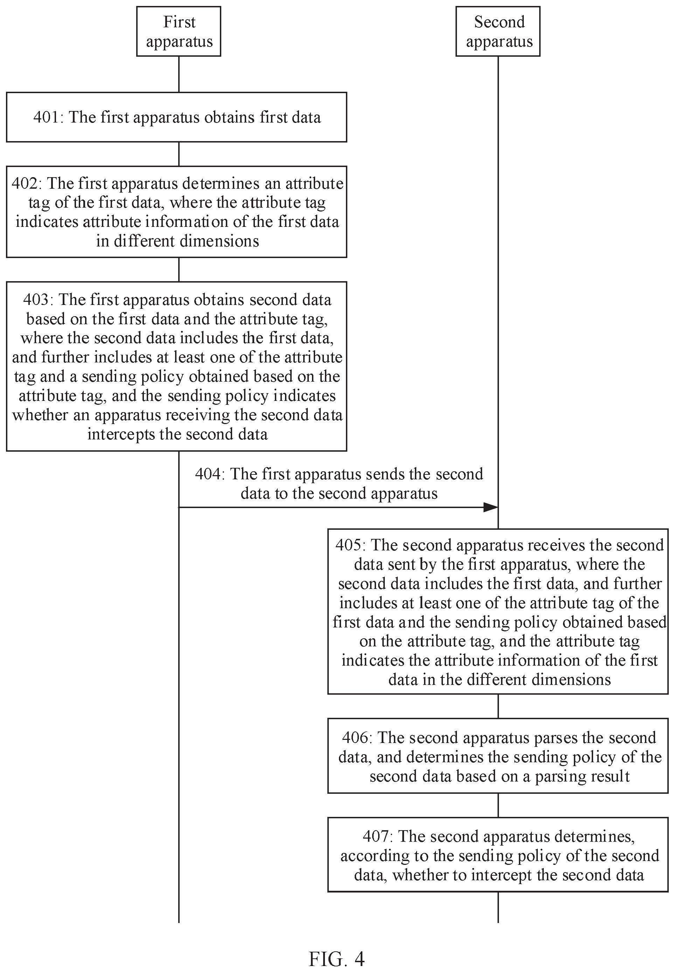

A data processing method provided in embodiments of this application may be applied to the implementation scenario shown in FIG. 1 or FIG. 2. The method may be performed by a first apparatus and a second apparatus in an interactive manner. A flowchart of the data processing method is shown in FIG. 4, and includes S401 to S407.

S401: The first apparatus obtains first data.

For example, the first data may be any data that has a transmission requirement. That the first data has the transmission requirement means that the first data needs to be transmitted. For example, when storage space of the first data changes, the first data has the transmission requirement. For example, when a user operates the first apparatus, and moves the first data from storage space of the first apparatus to storage space of a removable storage device, the storage space of the first data changes, the first data has the transmission requirement, and the removable storage device is, for example, a USB flash drive (universal serial bus flash disk). In a process of transmitting the first data, the first data in original storage space may be retained. For example, the user performs a copy operation in the process of transmitting the first data. Alternatively, the first data in the original storage space may be deleted. For example, the user performs a cut operation in the process of transmitting the first data. This is not limited in this embodiment of this application. The transmission requirement of the first data may be currently generated. For example, the first apparatus detects, based on an interaction operation with the user, that data A has a transmission requirement, and the first apparatus determines that the data A is the first data. In addition, the first apparatus may be a source sending device of the first data as shown in the foregoing example, or may be an intermediate device in the process of transmitting the first data. That is, the first apparatus receives, based on a communication connection to another network device, the first data sent by the another network device.

In a possible case, the first data may alternatively be data obtained by the first apparatus, for example, data stored in the first apparatus. Because the first apparatus first stores the first data, and subsequently needs to adjust the storage space of the first data, transmission of the first data is involved. Therefore, the first data needs to be processed, to implement transmission protection. Regardless of which of the foregoing cases the first data falls under, a data type of the first data is not limited in this embodiment of this application. The first data may be game data, video data, or another type of data.

S402: The first apparatus determines an attribute tag of the first data, where the attribute tag indicates attribute information of the first data in different dimensions.

For example, the first apparatus may receive the attribute tag set by an operation object, to determine the attribute tag of the first data. For example, the first apparatus provides an information input control, and the operation object inputs the attribute tag of the first data based on the information input control. The operation object may be operation and maintenance personnel or another person for data security management, or may be the user who operates the first apparatus as described in the example in S401.

In a possible case, the first apparatus may alternatively automatically determine the attribute tag of the first data, and a determining process includes but is not limited to: obtaining at least one piece of classification information of the first data, where the classification information indicates an importance degree of the first data in a corresponding classification, the first data corresponds to at least one classification, and classifications indicated by all pieces of classification information in the at least one piece of classification information are different; and determining the attribute tag based on the at least one piece of classification information.

The classification information of the first data includes but is not limited to data confidentiality information, type information, object identity information, and the like. The data confidentiality information indicates a confidentiality level of the first data. The data confidentiality information includes core, top secret, confidential, secret, public, general, and the like. Importance degrees of the first data at different confidentiality levels are different. For example, an importance degree of core data is higher than that of public data, and in some cases, the data confidentiality information may also be referred to as data classification level information. The type information indicates a type of the first data. Taking an enterprise as an example, the type information includes enterprise application data, financial data, contract data, and the like. Importance degrees of the first data of different types are different. An importance degree of the contract data is higher than that of the financial data, and the importance degree of the financial data is higher than that of the enterprise application data. The object identity information indicates an identity of an object corresponding to the first data. The object corresponding to the first data may be a statistical object for collecting statistics on the first data, namely, an owner of the first data, or may be a user object for sending the first data. Taking an enterprise as an example, the object identity information includes a director, a supervisor, an employee, and the like. In this case, an importance degree of the first data corresponding to the director is higher than that of the first data corresponding to the supervisor.

A process in which the first apparatus obtains the classification information is not limited in this embodiment of this application. The first apparatus may perform data analysis on the first data, to determine the classification information of the first data. For example, data content of the first data is analyzed to determine the type information of the first data, a storage path of the first data is analyzed to determine the data confidentiality information of the first data, or a user identity (identity document, ID) corresponding to the first data is analyzed to determine the object identity information of the first data. The user ID may be a user ID included in the storage path of the first data, or may be an ID of a logged-in user in an operation process of transmitting the first data. For example, if a user A sends the first data externally by email, the first apparatus determines a user ID based on an email of the user A, and determines the object corresponding to the first data based on the user ID, to determine the object identity information based on position information of the object in an enterprise.

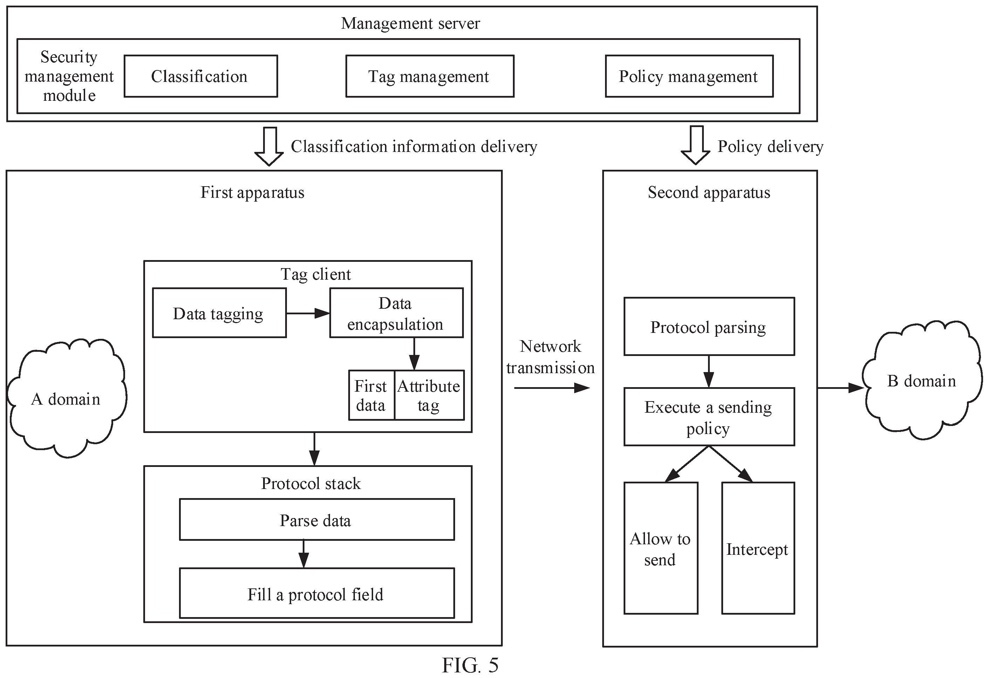

The foregoing operation may be performed by the first apparatus, or may be performed by a management server. As shown in FIG. 5, the management server includes a security management module, and the security management module is responsible for a security management related function. The security management module includes a classification unit, a tag management unit, and a policy management unit, which are responsible for policy management, tag management, data classification management, and the like. The classification unit may determine the classification information of the first data by performing data analysis on the first data, and then send the obtained classification information to the first apparatus, so that the first apparatus obtains the classification information of the first data.

In addition, the classification information may alternatively be obtained by the operation object of the first apparatus by interacting with the first apparatus, and the first apparatus determines the classification information of the first data based on the classification information input by the operation object. For example, in a process of storing the first data, the first apparatus pops up the information input control, and the operation object needs to input the classification information of the first data in the information input control, to store the first data in the storage space of the first apparatus.

Regardless of a manner in which the first apparatus obtains the classification information of the first data, the first apparatus may determine the attribute tag of the first data based on the at least one piece of classification information. In a possible case, the attribute tag includes at least one of a confidentiality level tag, a data type tag, and an object identity tag, the confidentiality level tag indicates a sensitivity level of the first data, the data type tag indicates a data type of the first data, and the object identity tag indicates an identity level of an object corresponding to the first data.

For example, a quantity of attribute tags of the first data may be in one-to-one correspondence with a quantity of pieces of classification information. For example, the data confidentiality information included in the classification information is a secret, the type information is enterprise application data, and the object identity information is a supervisor. It is determined that the confidentiality level tag is secret data based on the data confidentiality information, the data type tag is the enterprise application data based on the type information, and the object identity tag is supervisor data based on the object identity information. A quantity of attribute tags of a first attribute may not be in one-to-one correspondence with the quantity of pieces of classification information. For example, the type information is the enterprise application data. After the first apparatus determines, based on the type information, that the data type tag is the enterprise application data, because the enterprise application data is data generated in a process of communication between members in the enterprise, and may include some business secrets in the enterprise, the first apparatus may determine, based on the type information, that the confidentiality level tag of the first data is the secret data.

In a possible case, in a process of determining the attribute tag based on the classification information, the first apparatus may further adjust the attribute tag based on different classification information. For example, the data confidentiality information of the first data is public, and the type information of the first data is the contract data. Although contract data needs to be disclosed to both a party A and a party B in a signing process, the contract data further needs to be kept confidential for another object. In a process of determining the attribute tag, the first apparatus determines that the confidentiality level tag of the first data is confidential data, and the data type tag is the contract data. For another example, the data type of the first data is the financial data, an object identity level of the statistical object of the first data is an employee, and the data confidentiality information of the first data is top secret. Although the first data is the financial data, the first data is household expenditure details collected by the employee, and is not financial information related to the enterprise. Therefore, the first apparatus determines that the confidentiality level tag of the first data is public data.

Similar to the process of determining the classification information, the foregoing process of determining the attribute tag based on the classification information may also be completed by another device. The another device is, for example, the management server in FIG. 5. The management server invokes the tag management unit to determine the attribute tag of the first data based on the classification information sent by the classification unit. Then, the management server sends the attribute tag of the first data to the first apparatus based on the communication connection to the first apparatus, and the first apparatus obtains the attribute tag of the first data accordingly.

S403: The first apparatus obtains second data based on the first data and the attribute tag, where the second data includes the first data, and further includes at least one of the attribute tag and a sending policy obtained based on the attribute tag, and the sending policy indicates whether an apparatus receiving the second data intercepts the second data.

In a possible case, after obtaining the attribute tag, the first apparatus may further display the attribute tag to the operation object, and the operation object checks and adjusts the attribute tag based on experience. Regardless of whether the operation object adjusts the attribute tag, the first apparatus may obtain the second data based on the attribute tag and the first data. A process of obtaining the second data includes but is not limited to the following two obtaining manners.

Obtaining manner 1: Obtain an encapsulation result, where the encapsulation result includes the first data and at least one of the attribute tag and the sending policy; and obtain the second data based on the encapsulation result.

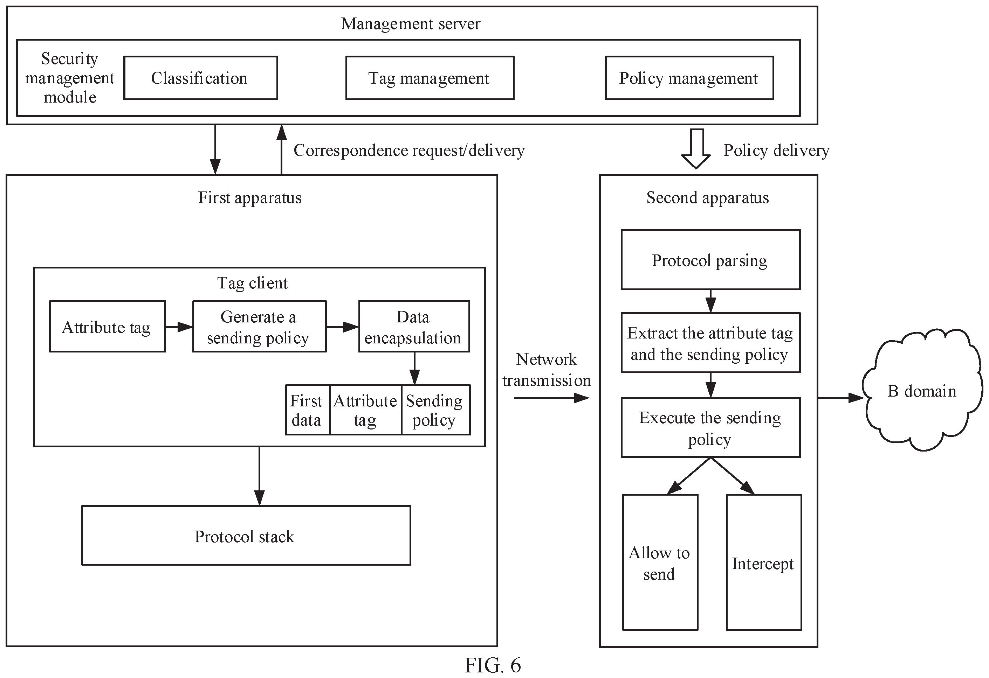

For example, a process in which the first apparatus determines the sending policy includes: obtaining a correspondence between the attribute tag and the sending policy; and determining the sending policy based on the correspondence and the attribute tag. The correspondence may be set based on experience, and the correspondence may be directly set on the first apparatus, that is, the first apparatus stores the correspondence between the attribute tag and the sending policy. In this case, the first apparatus may access the storage space to obtain the correspondence, between the attribute tag and the sending policy, that is stored in the storage space. The correspondence may alternatively be set on another device. The another device is, for example, the management server shown in FIG. 6. The policy management unit of the management server is configured to store the correspondence between the attribute tag and the sending policy. As shown in FIG. 6, the first apparatus may send a correspondence request to the management server, and the management server returns the correspondence between the sending policy and the attribute tag to the first apparatus based on the received request.

Regardless of a manner in which the first apparatus obtains the correspondence between the attribute tag and the sending policy, the first apparatus may search for the correspondence between the attribute tag and the sending policy based on the attribute tag of the first data, and determine the sending policy that needs to be encapsulated in the second data. For example, if the attribute tag is top secret data, the corresponding sending policy is restricted sending; if the attribute tag is financial data, the corresponding sending policy is restricted sending; if the attribute tag is public data, the corresponding sending policy is allowed sending. Restricted sending and allowed sending refer to sending externally, that is, a network domain in which the first data arrives is different from a network domain from which the first data is sent. For example, in FIG. 5, the first data in the first apparatus in A domain is sent to B domain. Because the A domain and the B domain are different network domains, the first data is sent externally in FIG. 5.

In a possible implementation, when the first data corresponds to a plurality of attribute tags, a sending policy corresponding to any attribute tag is restricted sending, and the first apparatus determines that the sending policy is restricted sending accordingly. Alternatively, the first apparatus determines a weight corresponding to each attribute tag, performs weighting calculation on the plurality of attribute tags, and determines the sending policy based on a weighted result. The weight corresponding to each attribute tag is determined based on an importance degree of classification information corresponding to each attribute tag in a plurality of pieces of classification information, and an importance degree of classification information corresponding to each attribute tag in a corresponding classification. For still another example, the classification information includes the data confidentiality information, the type information, and the object identity information. An importance degree of the data confidentiality information is higher than that of the type information, and the importance degree of the type information is higher than that of the object identity information. Therefore, the first apparatus determines that a first weight of the data confidentiality information is 0.5, a first weight of the type information is 0.3, and the importance degree of the object identity information is 0.2. When the data confidentiality information is a secret, the type information is enterprise application data, and the object identity information is a supervisor, based on a sensitivity degree of the secret in a sensitivity level, the first apparatus sets a second weight to 0.5, a second weight of the enterprise application data to 0.3, and a second weight of the supervisor to 0.3. Then, the weight of the attribute tag is determined based on the first weight and the second weight. For example, the first weight is multiplied by the second weight, and an obtained product is the weight of the attribute tag. In this case, a weight of the attribute tag being secret data is 0.25, a weight of the attribute tag being the enterprise application data is 0.09, and a weight of the attribute tag being supervisor data is 0.06.

After determining the weight of the attribute tag, the first apparatus may perform weighting calculation based on the weight of the attribute tag. For example, the first apparatus determines that an initial value of the sending policy for restricted sending is -1, and an initial value of the sending policy for allowed sending is 1. An initial value of the sending policy corresponding to each attribute tag is multiplied by a weight of each attribute tag, and a plurality of products obtained through multiplication are added. When a sum value is a positive number, the first apparatus determines that the sending policy is allowed sending; or when a sum value is a negative number, the first apparatus determines that the sending policy is restricted sending.

In addition, the foregoing process of determining the sending policy based on the attribute tag may be performed by the first apparatus, or may be performed by the management server. For example, the first apparatus sends the attribute tag to the management server, and the management server determines, through the policy management unit based on the attribute tag and the correspondence, the sending policy corresponding to the attribute tag, and sends the determined sending policy to the first apparatus. Because the attribute tag indicates the attribute information of the first data in the different dimensions, whether the first data is sensitive data that needs transmission protection may be determined based on the attribute information in the different dimensions, and the sending policy of the first data is determined based on whether the first data needs transmission protection, so that the determined sending policy is highly reliable.

Regardless of a manner in which the first apparatus obtains the sending policy, after obtaining the sending policy, the first apparatus may select at least one of the attribute tag and the sending policy and encapsulate the selected one together with the first data, and determine the second data based on an encapsulation result. For example, the first apparatus may choose to encapsulate only the first data and the attribute tag. For example, as shown in FIG. 5, the first apparatus includes a tag client, configured to tag the first data, encapsulate the first data, and the like. The first apparatus encapsulates the attribute tag and the first data together through the tag client, to obtain an encapsulation result including the first data and the attribute tag.

Alternatively, the first apparatus may choose to encapsulate only the first data and the sending policy, or may choose to encapsulate the first data, the attribute tag, and the sending policy. For example, as shown in FIG. 6, after generating the sending policy based on the attribute tag, the tag client encapsulates the sending policy, the attribute tag, and the first data together, to obtain an encapsulation result including the first data, the attribute tag, and the sending policy. Refer to FIG. 5 and FIG. 6. Regardless of a manner in which the first apparatus encapsulates the first data, the encapsulated sending policy or the encapsulated attribute tag is centrally configured at a specific location of the encapsulation result, where the specific location is, for example, a tail end or a header of the encapsulation result. Through centralized configuration, when subsequently parsing the encapsulation result to extract the attribute tag or the sending policy, the second apparatus only needs to read the data at the specific location, so that an extraction process is simple, and efficiency is high.

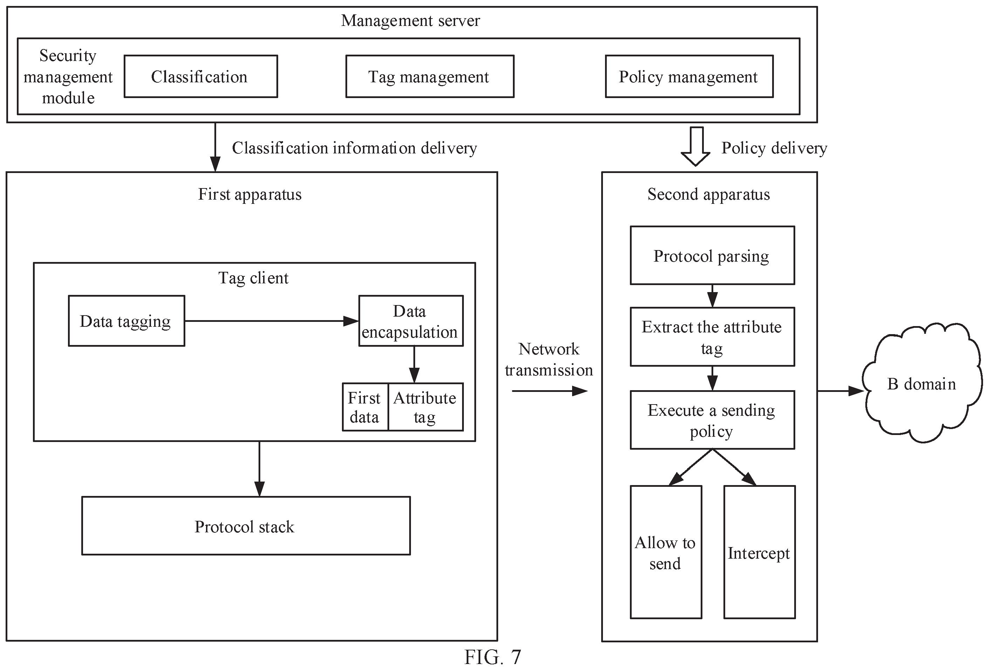

In a possible case, the first apparatus may directly determine the encapsulation result as the second data. For example, as shown in FIG. 6 and FIG. 7, the first apparatus further includes a protocol stack, and the protocol stack is deployed in an operating system (operating system, OS) kernel, and may also be referred to as a kernel plug-in in some cases. When the first data needs to be sent, the tag client sends the encapsulated encapsulation result to the protocol stack, and the protocol stack sends the encapsulation result to the second apparatus. The protocol stack may be shown in FIG. 6 and FIG. 7, and does not perform a filling operation on the received encapsulation result, that is, the encapsulation result is used as the to-be-sent second data.

For example, the first apparatus may alternatively fill the encapsulation result, to obtain the second data. The filling process includes but is not limited to: filling at least one of the attribute tag and the sending policy in a protocol field of the encapsulation result, to obtain the second data. FIG. 5 is still used as an example. The first apparatus parses, by using the protocol stack, information carried in the encapsulation result, to determine information that needs to be filled, and then fills the information obtained by parsing in the protocol field, where the information is the sending policy or the attribute tag encapsulated in the foregoing embodiment. The at least one of the attribute tag and the sending policy is filled in the protocol field of the encapsulation result in which the at least one of the attribute tag and the sending policy has been encapsulated, to implement backup of the at least one of the attribute tag and the sending policy, thereby avoiding that the second data is damaged in a transmission process, causing the apparatus for receiving the second data to fail to parse the protocol field and to be incapable of extracting the attribute tag or the sending policy filled in the protocol field. In this case, the apparatus for receiving the second data may continue to read the encapsulated attribute tag or the encapsulated sending policy, and the sending policy is obtained, thereby improving transmission reliability.

A process of filling the at least one of the attribute tag and the sending policy in the protocol field of the encapsulation result is similar to the process of filling the at least one of the attribute tag and the sending policy in the protocol field of the first data. For a detailed process, refer to related descriptions in Obtaining manner 2. Details are not described herein again.

Obtaining manner 2: Fill the at least one of the attribute tag and the sending policy in a protocol field of the first data, to obtain the second data.

FIG. 5 is still used as an example. After obtaining the at least one of the attribute tag and the sending policy, the tag client of the first apparatus may directly send the first data and the at least one of the obtained attribute tag and the obtained sending policy to the protocol stack. The protocol stack performs field parsing on the received first data, and then fills the at least one of the attribute tag and the sending policy in the protocol field. A filled protocol field is not limited in this embodiment of this application. In an internet protocol version 4 (internet protocol version 4, IPv4) scenario, the protocol field may be an option (option) field in the transmission control protocol/internet protocol (transmission control protocol/internet protocol, TCP/IP). In an internet protocol version 6 (internet protocol version 6, IPv6) scenario, the protocol field may be a field in an extension packet header of the first data. The attribute tag being filled is used as an example. The protocol stack may directly assign a value of the attribute tag to the protocol field; or may determine a first value corresponding to the attribute tag, and assign the first value to the protocol field. The attribute tag being a top secret is used as an example. A first value corresponding to the top secret is, for example, 1. The attribute tag being a core is used as an example. A first value corresponding to the core is, for example, 0.

S404: The first apparatus sends the second data to the second apparatus.

In a possible implementation, for a case in which the first data does not need to be sent immediately, for example, the first data shown in S401 is data stored in the first apparatus, after generating the second data, the first apparatus first stores the second data in the storage space or a local disk. In a subsequent process in which the first data needs to be transmitted, because the second data includes the first data, the first data may be transmitted by sending the second data to the second apparatus, as shown in FIG. 5 to FIG. 7. In this way, when the first data needs to be transmitted, the generated second data is directly sent, thereby improving data transmission efficiency.

For example, the second apparatus is a device configured at a network boundary, and is configured to transmit data to different network domains. The second apparatus may be independently deployed in a network environment, is deployed in a serial connection manner, and is configured to monitor data, parse a protocol field, execute a tag policy, and the like. A network topology diagram shown in FIG. 3 is used as an example. The second apparatus may be an email server configured at the network boundary, to manage whether to send an email to another network domain, or a gateway device in the network DLP shown in FIG. 3. When the to-be-sent first data needs to be sent to another network domain, the first apparatus sends the second data including the first data to the second apparatus, so that the second apparatus manages external sending of the second data.

S405: The second apparatus receives the second data sent by the first apparatus, where the second data includes the first data, and further includes at least one of the attribute tag of the first data and the sending policy obtained based on the attribute tag, and the attribute tag indicates the attribute information of the first data in the different dimensions.

For example, the second data received by the second apparatus is obtained based on the first data and the attribute tag, the second data includes the first data, and further includes at least one of the attribute tag and the sending policy, and the attribute tag indicates the attribute information of the first data in the different dimensions. For detailed descriptions of the second data, refer to related content in S403. Details are not described herein again.

S406: The second apparatus parses the second data, and determines the sending policy of the second data based on a parsing result.

Because the second data is obtained based on the attribute tag, and the attribute tag indicates the attribute information of the first data in the different dimensions, the second apparatus may determine, by parsing the second data and based on the attribute information, whether the first data is sensitive data that needs transmission protection, and further·determine the sending policy of the second data including the first data. In a possible implementation, for a case in which the second data includes at least one of the sending policy and the attribute tag in S403, there are but are not limited to the following plurality of determining manners in which the second apparatus determines the sending policy of the second data based on the parsing result.

Determining manner 1: When the second data includes the attribute tag, the second apparatus parses the second data, and determines the attribute tag based on the parsing result; and obtains the correspondence between the attribute tag and the sending policy, and determines the sending policy based on the correspondence and the determined attribute tag.

For example, the second apparatus performs protocol parsing on a packet header of the second data, and determines the attribute tag based on the parsing result, where the parsing result includes a protocol field, and a process of determining the attribute tag based on the parsing result includes but is not limited to: when the protocol field obtained by parsing includes the attribute tag, extracting the attribute tag from the protocol field; or when the protocol field obtained by parsing does not include the attribute tag, performing file restoration on the parsing result, and extracting the attribute tag from a restoration result.

For a case in which the first apparatus fills the attribute tag in the protocol field in the process of obtaining the second data, for example, in S403, the attribute tag is directly filled in or the attribute tag is first encapsulated and then filled in, the protocol field obtained by the second apparatus by parsing includes the attribute tag, and the second apparatus may directly extract the attribute tag included in the protocol field, so that the process of obtaining the attribute tag by the second apparatus is simple, and extraction efficiency is high. That the protocol field includes the attribute tag means that the protocol field is a field that has been assigned a value, and the second apparatus may determine the corresponding attribute tag based on the value of the protocol field.

In a possible case, the protocol field obtained by the second apparatus by parsing does not include the attribute tag. This case includes but is not limited to two causes. Cause 1: The first apparatus does not fill the attribute tag in the protocol field in the process of obtaining the second data, for example, in S403, encapsulates the attribute tag and the first data, and determines the encapsulation result as the second data. Cause 2: The first apparatus first encapsulates the attribute tag and then fills the attribute tag. However, because the second data is damaged in the transmission process, the second apparatus fails to parse the protocol field. Regardless of whether the protocol field obtained by parsing does not include the attribute tag because of Cause 1 or Cause 2, the second apparatus may determine, when the protocol field does not include the attribute tag, that the second data is obtained by encapsulating the attribute tag and the first data, and continue to perform file restoration on the parsing result, to decapsulate the second data. The protocol field does not include the attribute tag, for example, is an idle field to which the protocol field is not assigned a value. The file restoration is, for example, performing payload (payload) parsing on the second data, to obtain the attribute tag encapsulated in a payload.

Regardless of a manner in which the second apparatus determines the attribute tag, the second apparatus may determine the sending policy based on the extracted attribute tag. The process in which the second apparatus determines the sending policy is similar to the process in which the first apparatus determines the sending policy. For details, refer to related descriptions in S403. Details are not described herein again.

Determining manner 2: When the second data includes the sending policy, the second data is parsed, and the sending policy included in the parsing result is extracted.

In a possible case, after protocol parsing is performed on the second data, a process of extracting the sending policy included in the parsing result includes: when the protocol field obtained by parsing includes the sending policy, extracting the sending policy from the protocol field; or when the protocol field obtained by parsing does not include the sending policy, performing file restoration on the parsing result, and extracting the sending policy from the restoration result. The process of extracting the sending policy from the protocol field is similar to the process of extracting the attribute tag from the protocol field. The process of performing file restoration on the parsing result and extracting the sending policy from the restoration result is similar to the process of performing file restoration on the parsing result and extracting the sending policy from the restoration result. For details, refer to related descriptions in Determining manner 1. Details are not described herein again. Because the second data includes a data-specific sending policy, the second apparatus may extract the sending policy, to implement transmission control according to the data-specific sending policy, so that a granularity of transmission control is a data granularity, the granularity is fine, and accuracy is high.

For a case in which the second data includes both the attribute tag and the sending policy, the second apparatus may flexibly select Determining manner 1 or Determining manner 2 to determine the sending policy. For example, the second apparatus may choose to use Determining manner 2, extract only the sending policy, and perform the operation in S407 according to the extracted sending policy. The second apparatus may further choose to extract the sending policy and the attribute tag, determine the sending policy based on the extracted attribute tag, verify the extracted sending policy according to the determined sending policy, and perform the operation in S407 according to the sending policy when the determined sending policy is consistent with the extracted sending policy, or restrict sending of the second data when the determined sending policy is inconsistent with the extracted sending policy.

S407: The second apparatus determines, according to the sending policy of the second data, whether to intercept the second data.

In a possible implementation, the second apparatus may choose to determine, only according to the sending policy, whether to intercept the second data. When the sending policy indicates that sending is restricted, the second apparatus determines to intercept the second data, for example, as shown in FIG. 5 to FIG. 7, intercepts the second data. When the sending policy indicates that sending is allowed, the second apparatus determines to allow to send the second data, for example, as shown in FIG. 5 to FIG. 7, allows to send the second data. For example, when determining, according to the sending policy, to allow to send the second data, the second apparatus sends the second data to a first network domain. The first network domain is determined based on the second data. The second apparatus may parse a destination address of the second data, and determine, based on the destination address, a second network domain to which the second data needs to be sent. The first network domain is different from a network domain in which the first apparatus is located.

In a possible case, the second apparatus may alternatively determine, based on a source address and a destination address of the second data, whether the second data needs to be cross-network-domain sent, and determine, based on a determining result and the sending policy, whether to intercept the second data. When the sending policy is allowed sending, regardless of whether the second data needs to be cross-network-domain sent, it may be determined to allow to send the second data. When the sending policy is restricted sending, and the second data does not belong to cross-network-domain transmission, it may be determined to allow to send the second data. When the sending policy is restricted sending, and the second data belongs to cross-network-domain transmission, it may be determined to intercept the second data. Cross-network-domain sending means that a network domain to which the second data is sent is different from a network domain in which the first apparatus is located. For example, in FIG. 5, the first network domain is B domain, and the network domain in which the first apparatus is located is A domain, so that cross-network-domain transmission is performed on the second data.

In addition, the second apparatus may directly send the second data in the process of sending the second data, and then a downstream network device may continue to determine, based on the received second data, whether the second data needs transmission protection, to determine the sending policy of the second data. The second apparatus may alternatively restore the first data based on the second data, and send the restored first data. Restoration is, for example, decapsulating the second data to obtain the encapsulated first data; or deleting information filled in the protocol field of the second data to obtain the first data, and sending the first data by restoring the first data, thereby reducing a volume of transmitted data, and improving sending efficiency.

The foregoing is the process in which the second apparatus sends the second data. In a possible case, the second apparatus further records transmission information of the second data. The transmission information includes but is not limited to user information of a user who sends the second data, a transmission moment of the second data, a transmission manner of the second data, a sending policy of the second data, and the like, to monitor data transmission based on the transmission information. In a possible implementation, the second apparatus may trigger a warning mechanism when detecting that the sending policy of the second data is restricted sending, for example, sending alarm information to the operation object, where the alarm information includes the transmission information of the second data. The second apparatus may immediately trigger the warning mechanism when there is the intercepted second data, or may trigger the alarm mechanism when a quantity of pieces of second data to be sent is limited to reach a warning threshold set based on experience, and remind, by using a warning, the operation object in a timely manner that sensitive data that needs transmission protection is transmitted, so that the operation object performs check based on the transmission information, thereby implementing data protection.

In conclusion, according to the data processing method provided in this embodiment of this application, because the attribute tag indicates the attribute information of the first data in the different dimensions, whether the first data needs transmission protection may be determined based on the attribute information in the different dimensions by using the attribute tag, to obtain the sending policy, to avoid data leakage caused by sending data that does not need to be transmitted, and ensure high security. In addition, the sending policy may be determined only based on the attribute tag. Therefore, few procedures are involved in determining the sending policy, operations are simple, and efficiency is high. In addition, the method for obtaining the second data by the first apparatus based on the attribute tag and the first data is not limited, so that flexibility is high. In addition, regardless of a method in which the first apparatus obtains the second data, the second apparatus has a corresponding parsing method, so that the sending policy is successfully obtained based on a parsing result of the second data, and universality is wide.

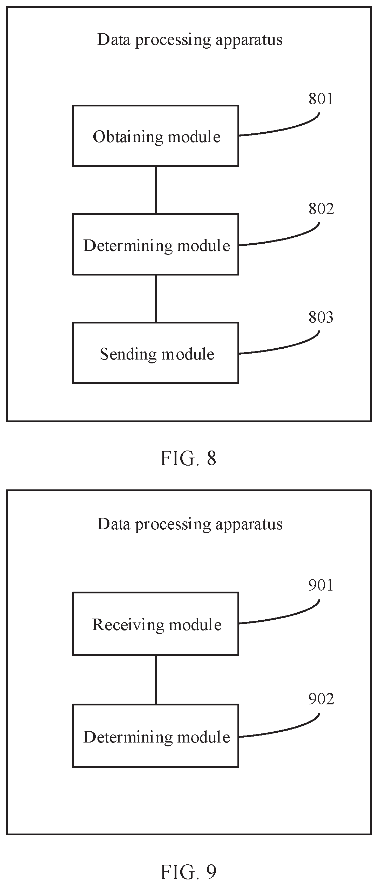

The foregoing describes the data processing method in embodiments of this application. In correspondence to the foregoing method, embodiments of this application further provide a data processing apparatus. FIG. 8 is a diagram of a structure of a data processing apparatus according to an embodiment of this application. Based on the following plurality of modules shown in FIG. 8, the data processing apparatus shown in FIG. 8 can perform all or a part of the operations of the first apparatus shown in FIG. 4. It should be understood that the apparatus may include more additional modules than the shown modules or a part of the shown modules may be omitted. This is not limited in embodiments of this application. As shown in FIG. 8, the apparatus includes:
an obtaining module 801, configured to obtain first data;
a determining module 802, configured to determine an attribute tag of the first data, where the attribute tag indicates attribute information of the first data in different dimensions, where
the obtaining module 801 is further configured to obtain second data based on the first data and the attribute tag, where the second data includes the first data, and further includes at least one of the attribute tag and a sending policy obtained based on the attribute tag, and the sending policy indicates whether an apparatus receiving the second data intercepts the second data; and
a sending module 803, sending the second data to a second apparatus.

In a possible implementation, the determining module 802 is configured to: obtain at least one piece of classification information of the first data, where the classification information indicates an importance degree of the first data in a corresponding classification, the first data corresponds to at least one classification, and classifications indicated by all pieces of classification information in the at least one piece of classification information are different; and determine the attribute tag based on the at least one piece of classification information.

In a possible implementation, the obtaining module 801 is configured to: obtain an encapsulation result, where the encapsulation result includes the first data and at least one of the attribute tag and the sending policy; and obtain the second data based on the encapsulation result.

In a possible implementation, the obtaining module 801 is configured to fill the at least one of the attribute tag and the sending policy in a protocol field of the encapsulation result, to obtain the second data.

In a possible implementation, the obtaining module 801 is configured to fill the at least one of the attribute tag and the sending policy in a protocol field of the first data, to obtain the second data.

In a possible implementation, the obtaining module 801 is further configured to: obtain a correspondence between the attribute tag and the sending policy; and determine the sending policy based on the correspondence and the attribute tag.

In a possible implementation, the attribute tag includes at least one of a confidentiality level tag, a data type tag, and an object identity tag, the confidentiality level tag indicates a sensitivity level of the first data, the data type tag indicates a data type of the first data, and the object identity tag indicates an identity level of an object corresponding to the first data.

Because the attribute tag indicates the attribute information of the first data in the different dimensions, the apparatus determines, based on the attribute information in the different dimensions, whether the first data needs transmission protection, and determines the sending policy, to avoid data leakage caused by allowing unintended data to be sent, and ensure high data transmission security. The sending policy may be determined only based on the attribute tag. Therefore, few procedures are involved in determining the sending policy, operations are simple, and efficiency is high.

An embodiment of this application further provides another data processing apparatus. FIG. 9 is a diagram of a structure of a data processing apparatus according to an embodiment of this application. Based on the following plurality of modules shown in FIG. 9, the data processing apparatus shown in FIG. 9 can perform all or a part of the operations of the second apparatus shown in FIG. 4. It should be understood that the apparatus may include more additional modules than the shown modules or a part of the shown modules may be omitted. This is not limited in embodiments of this application. As shown in FIG. 9, the apparatus includes:
a receiving module 901, configured to receive second data sent by a first apparatus, where the second data includes first data, and further includes at least one of an attribute tag of the first data and a sending policy obtained based on the attribute tag, and the attribute tag indicates attribute information of the first data in different dimensions; and
a determining module 902, configured to: parse the second data, and determine the sending policy of the second data based on a parsing result, where
the determining module 902 is further configured to determine, according to the sending policy of the second data, whether to intercept the second data.

In a possible implementation, the second data includes the attribute tag, and the determining module 902 is configured to: determine the attribute tag based on the parsing result; and obtain the correspondence between the attribute tag and the sending policy, and determine the sending policy based on the correspondence and the determined attribute tag.

In a possible implementation, the determining module 902 is configured to: when a protocol field obtained by parsing includes the attribute tag, extract the attribute tag from the protocol field; or when the protocol field obtained by parsing does not include the attribute tag, perform file restoration on the parsing result, and extract the attribute tag from a restoration result.

In a possible implementation, the second data includes a sending policy, and the determining module 902 is configured to: when a protocol field obtained by parsing includes the sending policy, extract the sending policy from the protocol field; or when the protocol field obtained by parsing does not include the sending policy, perform file restoration on the parsing result, and extract the sending policy from a restoration result.

In a possible implementation, the apparatus further includes: a forwarding module, configured to send the second data to a first network domain when it is determined, according to the sending policy, to allow to send the second data, where the first network domain is determined based on the second data, and the first network domain is different from a network domain in which the first apparatus is located.

In a possible implementation, the attribute tag includes at least one of a confidentiality level tag, a data type tag, and an object identity tag, the confidentiality level tag indicates a sensitivity level of the first data, the data type tag indicates a data type of the first data, and the object identity tag indicates an identity level of an object corresponding to the first data.

Because the attribute tag indicates the attribute information of the first data in the different dimensions, the apparatus determines, based on the attribute information in the different dimensions, whether the first data needs transmission protection, and determines the sending policy, to avoid data leakage caused by allowing unintended data to be sent, and ensure high data transmission security. The sending policy may be determined by parsing only the second data. Therefore, few procedures are involved in determining the sending policy, operations are simple, and efficiency is high.

It should be understood that when the apparatus provided in FIG. 8 or FIG. 9 implement functions of the apparatus, division into the foregoing functional modules is merely used as an example for description. During actual application, the foregoing functions may be allocated to different functional modules for implementation based on a requirement. In other words, an internal structure of a device is divided into different functional modules, to implement all or some of the functions described above. In addition, the apparatuses provided in the foregoing embodiments and the method embodiments belong to a same concept. For specific implementation processes of the apparatuses, refer to the method embodiments. Details are not described herein again.

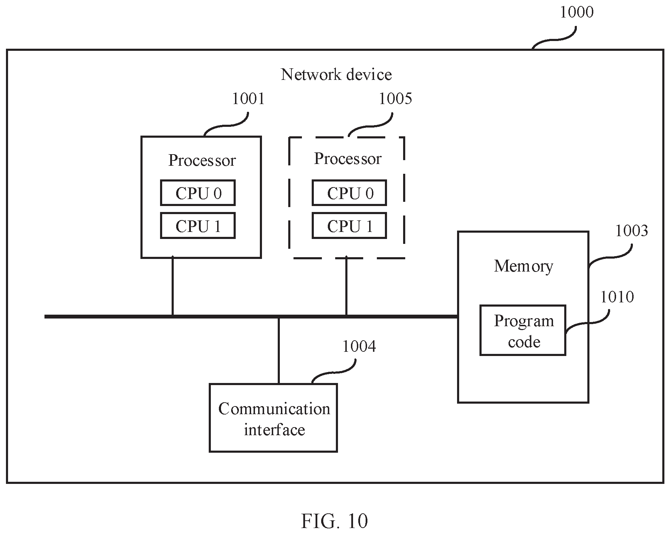

FIG. 10 is a diagram of a structure of a network device 1000 according to an example embodiment of this application. The network device 1000 shown in FIG. 10 is configured to perform operations in the data processing method shown in FIG. 4. The network device 1000 is, for example, a switch or a router. The network device 1000 may be implemented by using a general bus architecture.

As shown in FIG. 10, the network device 1000 includes at least one processor 1001, a memory 1003, and at least one communication interface 1004.

The processor 1001 is, for example, a general-purpose central processing unit (central processing unit, CPU), a digital signal processor (digital signal processor, DSP), a network processor (network processor, NP), a graphics processing unit (graphics processing unit, GPU), a neural-network processing unit (neural-network processing unit, NPU), a data processing unit (data processing unit, DPU), a microprocessor, or one or more integrated circuits configured to implement the solutions of this application. For example, the processor 1001 includes an application-specific integrated circuit (application-specific integrated circuit, ASIC), a programmable logic device (programmable logic device, PLD) or another programmable logic device, a transistor logic device, a hardware component, or any combination thereof. The PLD is, for example, a complex programmable logic device (complex programmable logic device, CPLD), a field-programmable gate array (field-programmable gate array, FPGA), generic array logic (generic array logic, GAL), or any combination thereof. The processor may implement or execute various logical blocks, modules, and circuits described with reference to the content disclosed in embodiments of this application. Alternatively, the processor may be a combination of processors implementing a computing function, for example, a combination including one or more microprocessors, or a combination of a DSP and a microprocessor.

Optionally, the network device 1000 further includes a bus. The bus is configured to transmit information between components of the network device 1000. The bus may be a peripheral component interconnect (peripheral component interconnect, PCI) bus or an extended industry standard architecture (extended industry standard architecture, EISA) bus, or the like. Buses may be classified into an address bus, a data bus, a control bus, and the like. For ease of representation, only one thick line is for representing the bus in FIG. 10, but this does not mean that there is only one bus or only one type of bus.

The memory 1003 is, for example, a read-only memory (read-only memory, ROM) or another type of static storage device that can store static information and instructions, for another example, a random access memory (random access memory, RAM) or another type of dynamic storage device that can store information and instructions, for another example, an electrically erasable programmable read-only memory (electrically erasable programmable read-only Memory, EEPROM), a compact disc read-only memory (compact disc read-only memory, CD-ROM) or another compact disc storage, an optical disk storage (including a compact disc, a laser disc, an optical disc, a digital versatile disc, a Blu-ray disc, or the like), a magnetic disk storage medium or another magnetic storage device, or any other medium that can be used to carry or store expected program code in a form of an instruction or a data structure and that can be accessed by a computer, but is not limited thereto. For example, the memory 1003 exists independently, and is connected to the processor 1001 through the bus. The memory 1003 may alternatively be integrated with the processor 1001.

The communication interface 1004 is configured to communicate with another device or a communication network through any apparatus such as a transceiver. The communication network may be an ethernet, a radio access network (RAN), a wireless local area network (wireless local area networks, WLAN), or the like. The communication interface 1004 may include a wired communication interface, and may further include a wireless communication interface. Specifically, the communication interface 1004 may be an ethernet (Ethernet) interface, a fast ethernet (fast ethernet, FE) interface, a gigabit ethernet (gigabit ethernet, GE) interface, an asynchronous transfer mode (asynchronous transfer mode, ATM) interface, a wireless local area network (wireless local area network, WLAN) interface, a cellular network communication interface, or a combination thereof. The ethernet interface may be an optical interface, an electrical interface, or a combination thereof. In this embodiment of this application, the communication interface 1004 may be used by the network device 1000 to communicate with another device.

During specific implementation, in an embodiment, the processor 1001 may include one or more CPUs, for example, a CPU 0 and a CPU 1 shown in FIG. 10. Each of the processors may be a single-core (single-CPU) processor, or may be a multi-core (multi-CPU) processor. The processor herein may be one or more devices, circuits, and/or processing cores configured to process data (for example, computer program instructions).

During specific implementation, in an embodiment, the network device 1000 may include a plurality of processors, for example, the processor 1001 and a processor 1005 shown in FIG. 10. Each of the processors may be a single-core processor (single-CPU), or may be a multi-core processor (multi-CPU). The processor herein may be one or more devices, circuits, and/or processing cores configured to process data (for example, computer program instructions).

During specific implementation, in an embodiment, the network device 1000 may further include an output device and an input device. The output device communicates with the processor 1001, and may display information in a plurality of manners. For example, the output device may be a liquid crystal display (liquid crystal display, LCD), a light-emitting diode (light-emitting diode, LED) display device, a cathode ray tube (cathode ray tube, CRT) display device, a projector (projector), or the like. The input device communicates with the processor 1001, and may receive an input from a user in a plurality of manners. For example, the input device may be a mouse, a keyboard, a touchscreen device, a sensor device, or the like.

In some embodiments, the memory 1003 is configured to store program code 1010 for executing the solutions of this application, and the processor 1001 may execute the program code 1010 stored in the memory 1003. In other words, the network device 1000 may implement the data processing method in the method embodiments through the processor 1001 and the program code 1010 in the memory 1003. The program code 1010 may include one or more software modules. Optionally, the processor 1001 may also store program code or instructions for executing the solutions of this application.

In a specific embodiment, the network device 1000 in this embodiment of this application may correspond to a compute device in the foregoing method embodiments.

The steps of the data processing method shown in FIG. 4 are completed through an integrated logic circuit of hardware in the processor of the network device 1000 or by using instructions in a form of software. The steps of the method disclosed with reference to embodiments of this application may be directly performed by a hardware processor, or may be performed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing method in combination with the hardware in the processor. To avoid repetition, details are not described herein again.

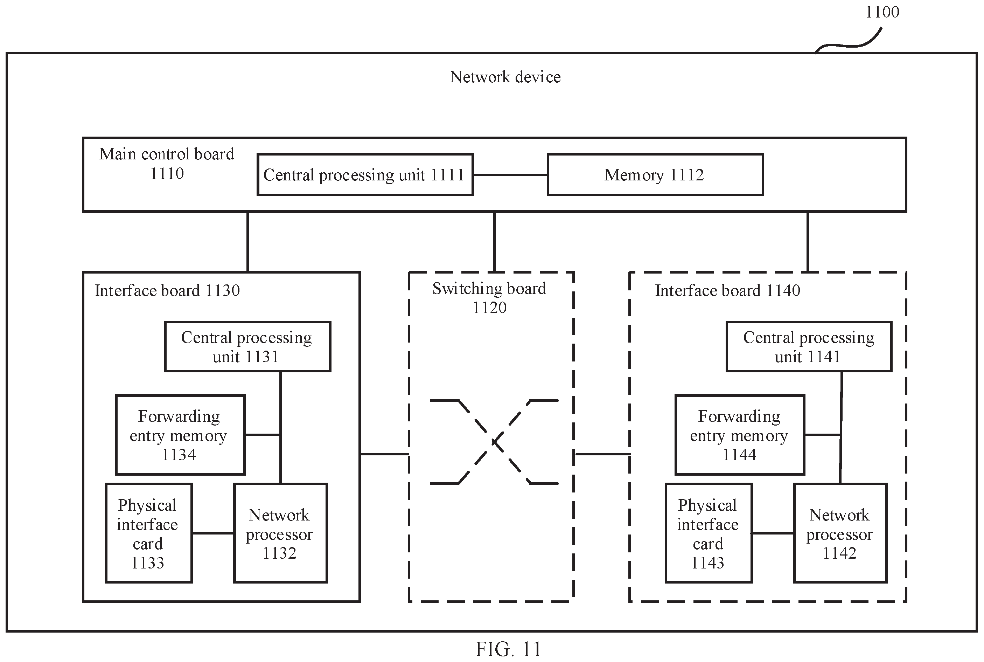

FIG. 11 is a diagram of a structure of a network device 1100 according to another example embodiment of this application. The network device 1100 shown in FIG. 11 is configured to perform all or some operations in the data processing method shown in FIG. 4. The network device 1100 is, for example, a switch or a router. The network device 1100 may be implemented by using a general bus architecture.

As shown in FIG. 11, the network device 1100 includes a main control board 1110 and an interface board 1130.

The main control board is also referred to as a main processing unit (main processing unit, MPU) or a route processor card (route processor card). The main control board 1110 is configured to: control and manage each component in the network device 1100, including functions of route computing, device management, device maintenance, and protocol processing functions. The main control board 1110 includes a central processing unit 1111 and a memory 1112.

The interface board 1130 is also referred to as a line processing unit (line processing unit, LPU), a line card (line card), or a service board. The interface board 1130 is configured to: provide various service interfaces, and forward a data packet. The service interfaces include but are not limited to an ethernet interface, a POS (Packet over SONET/SDH) interface, and the like. The ethernet interface is, for example, a flexible ethernet service client (Flexible Ethernet Client, FlexE Client) interface. The interface board 1130 includes a central processing unit 1131, a network processor 1132, a forwarding entry memory 1134, and a physical interface card (physical interface card, PIC) 1133.

The central processing unit 1131 on the interface board 1130 is configured to: control and manage the interface board 1130 and communicate with the central processing unit 1111 on the main control board 1110.

The network processor 1132 is configured to implement packet forwarding processing. A form of the network processor 1132 may be a forwarding chip. The forwarding chip may be a network processor (network processor, NP). In some embodiments, the forwarding chip may be implemented through an application-specific integrated circuit (application-specific integrated circuit, ASIC) or a field programmable gate array (field programmable gate array, FPGA). Specifically, the network processor 1132 is configured to forward a received packet based on a forwarding table stored in the forwarding entry memory 1134. If a destination address of the packet is an address of the network device 1100, the network processor 1132 sends the packet to a CPU (for example, the central processing unit 1131) for processing. If a destination address of the packet is not an address of the network device 1100, the network processor 1132 finds, from the forwarding table based on the destination address, a next hop and an outbound interface that correspond to the destination address, and forwards the packet to the outbound interface corresponding to the destination address. Processing an uplink packet may include: processing an inbound interface of the packet and searching a forwarding table. Processing a downlink packet may include: searching a forwarding table, and the like. In some embodiments, the central processing unit may also perform a function of a forwarding chip, for example, implement software forwarding based on a general-purpose CPU, so that no forwarding chip is required in the interface board.

The physical interface card 1133 is configured to implement a physical layer interconnection function, so that original traffic enters the interface board 1130 from the physical interface card, and a processed packet is sent out from the physical interface card 1133. The physical interface card 1133 is also referred to as a subcard, may be installed on the interface board 1130, and is responsible for converting an optical/electrical signal into a packet, performing validity check on the packet, and then forwarding the packet to the network processor 1132 for processing. In some embodiments, the central processing unit 1131 may also perform a function of the network processor 1132, for example, implement software forwarding based on a general-purpose CPU. Therefore, the network processor 1132 is not required in the physical interface card 1133.

Optionally, the network device 1100 includes a plurality of interface boards. For example, the network device 1100 further includes an interface board 1140. The interface board 1140 includes a central processing unit 1141, a network processor 1142, a forwarding entry memory 1144, and a physical interface card 1143. Functions and implementations of components in the interface board 1140 are the same as or similar to those of the interface board 1130, and details are not described herein again.

Optionally, the network device 1100 further includes a switching board 1120. The switching board 1120 may also be referred to as a switch fabric unit (switch fabric unit, SFU). When the network device 1100 has a plurality of interface boards, the switching board 1120 is configured to perform data exchange between the interface boards. For example, the interface board 1130 and the interface board 1140 may communicate with each other through the switching board 1120.

The main control board 1110 is coupled to the interface board. For example, the main control board 1110, the interface board 1130, the interface board 1140, and the switching board 1120 are connected to a system backboard through a system bus for interworking. In a possible implementation, an inter-process communication (inter-process communication, IPC) channel is established between the main control board 1110 and the interface board 1130 and between the main control board 1110 and the interface board 1140, and communication between the main control board 1110 and the interface board 1130 and between the main control board 1110 and the interface board 1140 is performed through the IPC channel.

Logically, the network device 1100 includes a control plane and a forwarding plane. The control plane includes the main control board 1110 and the central processing unit 1111. The forwarding plane includes various components that perform forwarding, for example, the forwarding entry memory 1134, the physical interface card 1133, and the network processor 1132. The control plane performs functions: a router, generating a forwarding table, processing signaling and a protocol packet, configuring and maintaining a state of the network device, and the like. The control plane delivers the generated forwarding table to the forwarding plane. On the forwarding plane, the network processor 1132 searches, based on the forwarding table delivered by the control plane, a table for forwarding the packet received by the physical interface card 1133. The forwarding table delivered by the control plane may be stored in the forwarding entry memory 1134. In some embodiments, the control plane and the forwarding plane may be completely separated, and are not on a same network device.

It should be noted that there may be one or more main control boards, and when there are a plurality of main control boards, a primary main control board and a secondary main control board may be included. There may be one or more interface boards. A network device with a stronger data processing capability provides more interface boards. There may also be one or more physical interface cards on the interface board. There may be no switching board or one or more switching boards. When there are a plurality of switching boards, load balancing and redundancy backup may be implemented together. In a centralized forwarding architecture, the network device may not need a switching board, and the interface board provides a function of processing service data of an entire system. In a distributed forwarding architecture, the network device may have at least one switching board, and data exchange between a plurality of interface boards is implemented through the switching board, to provide a large-capacity data exchange and processing capability. Therefore, a data access and processing capability of the network device in the distributed architecture is greater than that of the network device in the centralized architecture. Optionally, a form of the network device may alternatively be a single board. To be specific, there is no switching board, and functions of the interface board and the main control board are integrated into the board. In this case, the central processing unit on the interface board and the central processing unit on the main control board may be combined into one central processing unit on the board, to perform functions obtained by combining the two central processing units. The network device in this form has a weak data exchange and processing capability (for example, a network device such as a low-end switch or router). A specific architecture that is to be used depends on a specific networking deployment scenario. This is not limited herein.

In a specific embodiment, the network device 1100 corresponds to the data processing apparatus shown in FIG. 8 or FIG. 9. In some embodiments, the determining module 802 in the data processing apparatus shown in FIG. 8 is equivalent to the central processing unit 1111 or the network processor 1132 in the network device 1100.

An embodiment of this application further provides a communication apparatus. The apparatus includes a transceiver, a memory, and a processor. The transceiver, the memory, and the processor communicate with each other through an internal connection path. The memory is configured to store instructions. The processor is configured to execute the instructions stored in the memory, to control the transceiver to receive a signal and control the transceiver to send a signal. In addition, when the processor executes the instructions stored in the memory, the processor is enabled to perform the data processing method.

It should be understood that the processor may be a CPU, or may be another general-purpose processor, a DSP, an ASIC, an FPGA, or another programmable logic device, a discrete gate or a transistor logic device, a discrete hardware component, or the like. The general-purpose processor may be a microprocessor, any conventional processor, or the like. It should be noted that the processor may be a processor that supports an advanced reduced instruction set computer machines (advanced RISC machines, ARM) architecture.

Further, in an optional embodiment, the memory may include a read-only memory and a random access memory, and provide instructions and data for the processor. The memory may further include a non-volatile random access memory. For example, the memory may further store information of a device type.

The memory may be a volatile memory or a non-volatile memory, or may include both a volatile memory and a non-volatile memory. The non-volatile memory may be a ROM, a programmable read-only memory (programmable ROM, PROM), an erasable programmable read-only memory (erasable PROM, EPROM), an EEPROM, or a flash memory. The volatile memory may be a RAM, and serves as an external cache. By way of an example but not limitative descriptions, many forms of RAMs are available, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

An embodiment of this application further provides a data processing device. The device includes a processor, and the processor is configured to load and run at least one instruction, so that the data processing device implements the data processing method provided in embodiments of this application. Optionally, the device further includes a memory, the memory is coupled to the processor, and the memory is configured to store at least one instruction.

An embodiment of this application further provides a data processing system. The system includes a first apparatus and a second apparatus. The first apparatus and the second apparatus are configured to interact with each other to perform the data processing method provided in embodiments of this application.

An embodiment of this application further provides a computer-readable storage medium. The storage medium stores at least one instruction, and the instruction is loaded and executed by a processor, to enable a computer to implement any data processing method above.

An embodiment of this application further provides a computer program (product). When the computer program is executed by a computer, a processor or the computer may be enabled to perform corresponding steps and/or procedures in the foregoing method embodiments.

An embodiment of this application further provides a chip. The chip includes a processor, configured to invoke, from a memory, instructions stored in the memory and run the instructions, to enable a communication device in which the chip is installed to perform any data processing method above.

An embodiment of this application further provides another chip. The chip includes an input interface, an output interface, a processor, and a memory. The input interface, the output interface, the processor, and the memory are connected through an internal connection path. The processor is configured to execute code in the memory; and when the code is executed, the processor is configured to perform any data processing method above.

All or some of the foregoing embodiments may be implemented by using software, hardware, firmware, or any combination thereof. When the software is used to implement embodiments, all or some of embodiments may be implemented in a form of a computer program product. The computer program product includes one or more computer instructions. When the computer program instructions are loaded and executed on the computer, the procedure or functions according to this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk Solid State Disk), or the like.

It should be noted that information (including but not limited to user equipment information, user personal information, and the like), data (including but not limited to data for analysis, data for storage, data for display, and the like), and signals in this application are all authorized by users or fully authorized by all parties, and collection, use, and processing of related data need to comply with related laws, regulations, and standards of related countries and regions. For example, the first data and the like in this application are obtained under full authorization.

A person of ordinary skill in the art may be aware that, with reference to the method steps and modules described in embodiments disclosed in this specification, the method steps and modules can be implemented by using software, hardware, firmware, or any combination thereof. To clearly describe interchangeability between the hardware and the software, the steps and compositions of embodiments have been usually described in terms of functions in the foregoing descriptions. Whether the functions are performed by hardware or software depends on particular applications and design constraints of the technical solutions. A person of ordinary skill in the art may use different methods to implement the described functions for each particular application, but it should not be considered that the implementation goes beyond the scope of this application.

A person of ordinary skill in the art may understand that all or some of the steps of embodiments may be implemented by hardware or a program instructing related hardware. The program may be stored in a computer-readable storage medium. The storage medium may be a read-only memory, a magnetic disk, an optical disc, or the like.

When the software is used to implement embodiments, all or some of embodiments may be implemented in a form of a computer program product. The computer program product includes one or more computer program instructions. In an example, the method according to embodiments of this application may be described in a context of machine-executable instructions. For example, the machine-executable instructions are included in a program module that is in a component for execution on a real or virtual processor of a target. Usually, the program module includes a routine, a program, a library, an object, a class, a component, a data structure, and the like, and executes a specific task or implements a specific abstract data structure. In various embodiments, functions of program modules may be combined or split between the described program modules. The machine-executable instructions for the program module may be executed locally or within a distributed device. In the distributed device, the program module may be located in both a local storage medium and a remote storage medium.

Computer program code used to implement the method in embodiments of this application may be written in one or more programming languages. The computer program code may be provided for a processor of a general-purpose computer, a dedicated computer, or another programmable data processing apparatus, so that when the program code is executed by the computer or the another programmable data processing apparatus, functions/operations specified in the flowcharts and/or block diagrams are implemented. The program code may be executed entirely on a computer, partly on a computer, as a standalone software package, partly on a computer and partly on a remote computer, or entirely on a remote computer or a server.

In the context of embodiments of this application, computer program code or related data may be carried in any appropriate carrier, so that the device, the apparatus, or the processor can perform various types of processing and operations described above. Examples of the carrier include a signal, a computer-readable medium, and the like.

Examples of the signal may include an electrical signal, an optical signal, a radio signal, a voice signal, or other forms of propagated signals, such as a carrier wave and an infrared signal.

The machine-readable medium may be any tangible medium that includes or stores programs for or with respect to an instruction execution system, apparatus, or device. The machine-readable medium may be a machine-readable signal medium or a machine-readable storage medium. The machine-readable medium may include but is not limited to an electronic, magnetic, optical, electromagnetic, infrared, or semiconductor system, apparatus, or device, or any appropriate combination thereof. A more detailed example of the machine-readable storage medium includes an electrical connection with one or more wires, a portable computer disk, a hard disk, a random access memory (RAM), a read-only memory (ROM), an erasable programmable read-only memory (EPROM or flash memory), an optical storage device, a magnetic storage device, or any appropriate combination thereof.

It may be clearly understood by a person skilled in the art that, for the purpose of convenient and brief description, for a detailed working process of the foregoing system, device, and module, refer to a corresponding process in the foregoing method embodiments. Details are not described herein again.

In the several embodiments provided in this application, it should be understood that the disclosed system, device, and method may be implemented in other manners. For example, the described device embodiment is merely an example. For example, division into the modules is merely logical function division and there may be other division manners during actual application. For example, a plurality of modules or components may be combined or may be integrated into another system, or some features may be ignored or not performed. In addition, the displayed or discussed mutual couplings or direct couplings or communication connections may be implemented through some interfaces. Indirect couplings or communication connections between the devices or modules may be electrical connections, mechanical connections, or connections in other forms.

Modules described as separate components may or may not be physically separate, and components displayed as modules may or may not be physical modules, to be specific, may be located at one place, or may be distributed on a plurality of network modules. Some or all of the modules may be selected based on actual requirements to implement the objectives of the solutions of embodiments of this application.

In addition, functional modules in embodiments of this application may be integrated into one processing module, or each of the modules may exist alone physically, or two or more modules may be integrated into one module. The integrated module may be implemented in a form of hardware, or may be implemented in a form of a software functional module.

If the integrated module is implemented in a form of a software functional module and sold or used as an independent product, the integrated module may be stored in a computer-readable storage medium. Based on this understanding, the technical solutions of this application essentially, or the part contributing to the conventional technology, or all or some of the technical solutions may be implemented in a form of a software product. The computer software product is stored in a storage medium, and includes several instructions for instructing a computer device (which may be a personal computer, a server, or a network device) to perform all or some of the steps of the method described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The terms such as "first" and "second" in this application are used to distinguish between same or similar items with basically same roles and functions. It should be understood that there is no logical or timing dependency between "first", "second", and "n^{th}", and neither a quantity nor an execution sequence is limited. It should also be understood that although the following descriptions use terms such as "first" and "second" to describe various elements, these elements should not be limited by the terms. These terms are simply used to distinguish one element from another. For example, a first image may be referred to as a second image, and similarly, a second image may be referred to as a first image without departing from the scope of the various examples. Both the first image and the second image may be images, and in some cases, may be separate and different images.

It should be further understood that sequence numbers of the processes do not mean execution sequences in embodiments of this application. The execution sequences of the processes should be determined based on functions and internal logic of the processes, and should not constitute any limitation on implementation processes of embodiments of this application.

In this application, the term "at least one" means one or more, and the term "a plurality of" in this application means two or more. For example, a plurality of second packets means two or more second packets. The terms "system" and "network" are often used interchangeably in this specification.

It should be understood that the terms used in the descriptions of the various examples in this specification are merely intended to describe specific examples and are not intended to impose a limitation. The terms "one" ("a" and "an") and "the" of singular forms used in the descriptions of the various examples and the appended claims are also intended to include plural forms, unless otherwise specified in the context clearly.

It should further be understood that the term "and/or" used in this specification indicates and includes any or all possible combinations of one or more of the associated listed items. The term "and/or" describes an association relationship for describing associated objects and represents that three relationships may exist. For example, A and/or B may represent the following three cases: Only A exists, both A and B exist, and only B exists. In addition, the character "/" in this application usually indicates an "or" relationship between the associated objects.

It should be further understood that the term "include" (also referred to as "includes", "including", "comprises", and/or "comprising") used in this specification specifies presence of the stated features, integers, steps, operations, elements, and/or components, with presence or addition of one or more other features, integers, steps, operations, elements, components, and/or their components not excluded.

It should be further understood that the terms "if" and "assuming that" may be interpreted to mean "when" ("when" or "upon") or "in response to determining" or "in response to detecting". Similarly, according to the context, the phrase "if it is determined that" or "if (a stated condition or event) is detected" may be interpreted as a meaning of "when it is determined that" or "in response to determining" or "when (a stated condition or event) is detected" or "in response to detecting (a stated condition or event)".

It should be understood that determining B based on A does not mean that B is determined based only on A, and B may alternatively be determined based on A and/or other information.

It should be further understood that "one embodiment", "an embodiment", or "a possible implementation" mentioned throughout this specification means that particular features, structures, or characteristics related to embodiments or implementations are included in at least one embodiment of this application. Therefore, "in one embodiment", "in an embodiment", or "in a possible implementation" appearing throughout this specification does not necessarily mean a same embodiment. In addition, these particular features, structures, or characteristics may be combined in one or more embodiments in any appropriate manner.

## Claims

1. A data processing method, wherein the method is applied to a first apparatus, and the method comprises:
obtaining first data;
determining an attribute tag of the first data, wherein the attribute tag indicates attribute information of the first data in different dimensions;
obtaining second data based on the first data and the attribute tag, wherein the second data comprises the first data, and further comprises at least one of the attribute tag and a sending policy obtained based on the attribute tag, and the sending policy indicates whether an apparatus receiving the second data intercepts the second data; and
sending the second data to a second apparatus.

2. The method according to claim 1, wherein determining the attribute tag of the first data comprises:
obtaining at least one piece of classification information of the first data, wherein the classification information indicates an importance degree of the first data in a corresponding classification, the first data corresponds to at least one classification, and classifications indicated by all pieces of classification information in the at least one piece of classification information are different; and
determining the attribute tag based on the at least one piece of classification information.

3. The method according to claim 1 or 2, wherein obtaining the second data based on the first data and the attribute tag comprises:
obtaining an encapsulation result, wherein the encapsulation result comprises the first data and at least one of the attribute tag and the sending policy; and
obtaining the second data based on the encapsulation result.

4. The method according to claim 3, wherein obtaining the second data based on the encapsulation result comprises:
filling the at least one of the attribute tag and the sending policy in a protocol field of the encapsulation result, to obtain the second data.

5. The method according to claim 1 or 2, wherein obtaining the second data based on the first data and the attribute tag comprises:
filling at least one of the attribute tag and the sending policy in a protocol field of the first data, to obtain the second data.

6. The method according to any one of claims 3 to 5, wherein before obtaining the second data based on the first data and the attribute tag, the method further comprises:
obtaining a correspondence between the attribute tag and the sending policy; and
determining the sending policy based on the correspondence and the attribute tag.

7. The method according to any one of claims 1 to 6, wherein the attribute tag comprises at least one of a confidentiality level tag, a data type tag, and an object identity tag, the confidentiality level tag indicates a sensitivity level of the first data, the data type tag indicates a data type of the first data, and the object identity tag indicates an identity level of an object corresponding to the first data.

8. A data processing method, wherein the method is applied to a second apparatus, and the method comprises:
receiving second data sent by a first apparatus, wherein the second data comprises first data, and further comprises at least one of an attribute tag of the first data and a sending policy obtained based on the attribute tag, and the attribute tag indicates attribute information of the first data in different dimensions;
parsing the second data, and determining the sending policy of the second data based on a parsing result; and
determining, according to the sending policy of the second data, whether to intercept the second data.

9. The method according to claim 8, wherein the second data comprises the attribute tag, and determining the sending policy of the second data based on the parsing result comprises:
determining the attribute tag based on the parsing result; and
obtaining a correspondence between the attribute tag and the sending policy, and determining the sending policy based on the correspondence and the determined attribute tag.

10. The method according to claim 9, wherein determining the attribute tag based on the parsing result comprises:
when a protocol field obtained by parsing comprises the attribute tag, extracting the attribute tag from the protocol field; or
when the protocol field obtained by parsing does not comprise the attribute tag, performing file restoration on the parsing result, and extracting the attribute tag from a restoration result.

11. The method according to claim 8, wherein the second data comprises the sending policy, and determining the sending policy of the second data based on the parsing result comprises:
when a protocol field obtained by parsing comprises the sending policy, extracting the sending policy from the protocol field; or
when the protocol field obtained by parsing does not comprise the sending policy, performing file restoration on the parsing result, and extracting the sending policy from a restoration result.

12. The method according to any one of claims 8 to 11, wherein after determining, according to the sending policy of the second data, whether to intercept the second data, the method further comprises:
sending the second data to a first network domain when it is determined, according to the sending policy, to allow to send the second data, wherein the first network domain is determined based on the second data, and the first network domain is different from a network domain in which the first apparatus is located.

13. The method according to any one of claims 8 to 12, wherein the attribute tag comprises at least one of a confidentiality level tag, a data type tag, and an object identity tag, the confidentiality level tag indicates a sensitivity level of the first data, the data type tag indicates a data type of the first data, and the object identity tag indicates an identity level of an object corresponding to the first data.

14. A data processing apparatus, wherein the apparatus comprises:
a transceiver module, configured to perform a receiving-related operation and/or a sending-related operation performed by a first apparatus in the method according to any one of claims 1 to 7; and
a processing module, configured to perform another operation that is not the receiving-related operation and/or the sending-related operation performed by the first apparatus in the method according to any one of claims 1 to 7.

15. A data processing apparatus, wherein the apparatus comprises:
a transceiver module, configured to perform a receiving-related operation and/or a sending-related operation performed by a second apparatus in the method according to any one of claims 8 to 13; and
a processing module, configured to perform another operation that is not the receiving-related operation and/or the sending-related operation performed by the second apparatus in the method according to any one of claims 8 to 13.

16. A data processing device, wherein the device comprises a processor, and the processor is configured to load and execute at least one instruction, so that the data processing device implements the data processing method according to any one of claims 1 to 7, or implements the data processing method according to any one of claims 8 to 13.

17. A data processing system, wherein the system comprises a first apparatus and a second apparatus, the first apparatus is configured to implement the data processing method according to any one of claims 1 to 7, and the second apparatus is configured to implement the data processing method according to any one of claims 8 to 13.

18. A computer-readable storage medium, wherein the computer-readable storage medium stores at least one instruction, and the instruction is loaded and executed by a processor to implement the data processing method according to any one of claims 1 to 7, or implement the data processing method according to any one of claims 8 to 13.

19. A chip, wherein the chip comprises a processor, and the processor is configured to run program instructions or code, so that a device comprising the chip performs the data processing method according to any one of claims 1 to 7, or performs the data processing method according to any one of claims 8 to 13.
